# EUROPEAN PATENT SPECIFICATION

(11) **EP 4 394 245 B1**
(45) Date of publication and mention of the grant of the patent: **07.05.2025**
(21) Application number: 23183545.5
(22) Date of filing: 05.07.2023
(51) Int. Cl.: F21S 43/14, F21S 43/241, F21S 43/243, F21S 43/245, F21S 43/242, F21S 43/247

(54) **INNER LENS AND LAMP INCLUDING THE SAME**
INNENLINSE UND LAMPE DAMIT
LENTILLE INTERNE ET LAMPE LA COMPRENANT

(30) Priority: 20.12.2022 KR 20220179136
(43) Date of publication of application: 03.07.2024
(73) Proprietor: Hyundai Mobis Co., Ltd., Gangnam-gu Seoul 06141 (KR)
(72) Inventor: KIM, Chul Hyun, Yongin-si (KR)
(74) Representative: Vossius & Partner Patentanwälte Rechtsanwälte mbB

(56) References cited:
- EP-A2- 2 211 087
- DE-A1- 102011 051 978
- JP-A- 2019 185 996
- JP-B2- 6 823 439
- US-A1- 2005 152 153
- US-A1- 2010 259 153
- US-B2- 11 396 989
- US-B2- 7 290 906

## Description

### CROSS-REFERENCE TO RELATED APPLICATIONS

This application claims the benefit of priority to Korean Patent Application No. 10-2022-0179136, filed in the Korean Intellectual Property Office on December 20, 2022.

### TECHNICAL FIELD

The present disclosure relates to an inner lens for a vehicle lamp.

### BACKGROUND

In general, a rear lamp provided on a rear side of a vehicle serves to provide information to an outside person. Examples of the rear lamp include a brake light that is turned on when a driver steps on a brake, a turn indicator that may repeatedly flash to notify a left turn or a right turn of the vehicle to the outside, a tail light that may notify the presence of a vehicle of a driver to an occupant in another vehicle positioned behind the vehicle of the driver in a dark tunnel, and the like. Meanwhile, such a rear lamp requires a function for forming a light distribution that satisfies the law, and in recent years, interest in not only a function of the rear lamp but also a design of the rear lamp for enhancing aesthetics is increasing.

In some lamps according to the related art, a functional component for implementing a function required for the rear lamp and a design component for implementing the design of the rear lamp have been separately provided. In this way, when the functional component and the design component are provided separately, a structure of the lamp is complicated, and at the same time, the cost required for manufacturing is increased.

Accordingly, in recent years, interest in a lamp in which the functional component and the design component are integrated so that the function and the design required for the rear lamp may be simultaneously implemented has been continuously increased. For example, the published patent application JP2018041711A discloses an inner lens for vehicle lamp, comprising a main body portion that emits light from the front surface of the lens, and a light guide portion extending from the outer edge of the main body portion.

### SUMMARY

The present invention has been made to solve the above-mentioned problems occurring in the prior art while advantages achieved by the prior art are maintained intact.

The invention is set out in the appended set of claims.

### BRIEF DESCRIPTION OF THE DRAWINGS

The above and other objects, features and advantages of the present invention will be more apparent from the following detailed description taken in conjunction with the accompanying drawings:
FIG. 1 is a longitudinal sectional view of a lamp according to the present disclosure;
FIG. 2 is a longitudinal cross-sectional view of the lamp illustrating an optical path of a light beam output from a light source according to the present disclosure;
FIG. 3 is an enlarged view of part "A" illustrated in FIG. 1; and
FIG. 4 is an enlarged view of part "B" illustrated in FIG. 1.

### DETAILED DESCRIPTION

Hereinafter, some embodiments of the present disclosure will be described in detail with reference to the exemplary drawings. In adding reference numerals to components of each drawing, it should be noted that identical or equivalent components are designated by an identical numeral even when they are displayed on other drawings. Further, in describing the embodiment of the present disclosure, a detailed description of the related known configuration or function will be omitted when it is determined that it interferes with the understanding of the embodiment of the present disclosure.

Further, in the description of components of the embodiments of the present disclosure, the terms such as first, second, A, B, (a) and (b) may be used. These terms are merely intended to distinguish one component from other components, and the terms do not limit the nature, order, or sequence of the components. When it is described that one component "is input into", "passes through", or "is output from" another component, the component may be directly input into, directly pass through, or be directly output from the other component, but a third component may be input, pass, or be output between the components.

Hereinafter, a lamp 1 according to the present disclosure will be described with reference to the accompanying drawings.

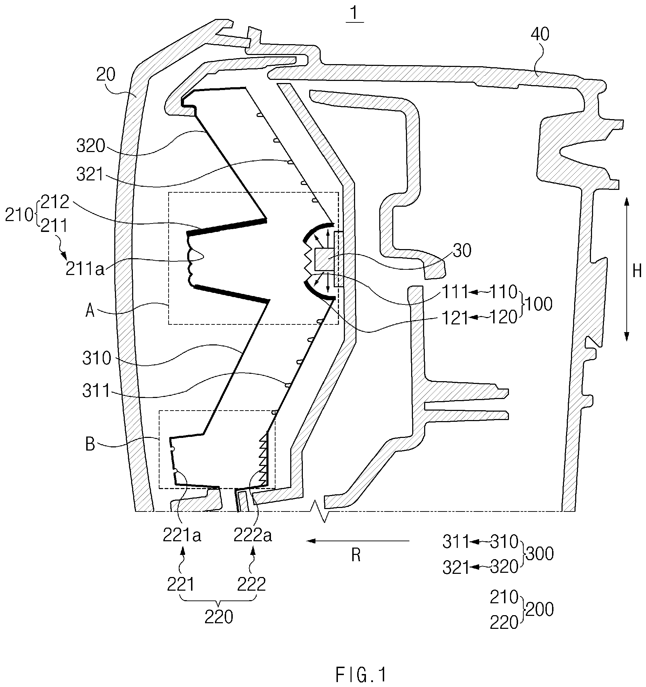

The lamp 1, according to the present disclosure, may provide information to an outside person. As an example, the lamp 1 may be a rear lamp provided behind a vehicle. Referring to FIG. 1, the lamp 1 may include an inner lens 10, an outer lens 20, a light source 30, and a housing 40.

A light beam output from the light source 30 may be input into, pass through, and be then output from the inner lens 10. The light beam output from the inner lens 10 may form a light distribution pattern and an image pattern. The light distribution pattern means a pattern light beam having light properties that satisfy regulations. The image pattern means a pattern light beam providing aesthetics to a person who looks at the lamp 1. Such an image pattern may be designed by a user to have various shapes. The inner lens 10 includes a light transmission part 100, a light distribution formation part 200, and an image formation part 300.

The light beam output from the light source 30 may be input into the light transmission part 100. The light transmission part 100 may output at least a portion of the input light beam. The light beam output from the light transmission part 100 may be named a transmission light beam. The light transmission part 100 may be disposed to surround the light source 30. The light transmission part 100 may include a first light transmission portion 110 and a second light transmission portion 120.

The light beam input into a first light distribution formation portion 210, which will be described below, may be output from the first light transmission portion 110. The light beam output from the first light transmission portion 110 may be a portion of the transmission light beam. The portion of the transmission light beam may be named a first transmission light beam. The first light transmission portion 110 may be disposed to face a first light distribution output area 211, which will be described below. Further, the first light transmission portion 110 may be disposed to face a surface of the light source 30 in an output direction "R." A transmission optic 111 may be formed in the first light transmission portion 110.

The transmission optic 111 may guide the first transmission light beam to the first light distribution output area 211. The transmission optic 111 may be formed on an area, through which the first transmission light beam is output, among the first light transmission portion 110. The transmission optic 111 may have a concavo-convex shape protruding in a direction opposite to the output direction "R." The output direction "R" may be defined as a direction in which the light beam is output from the first light distribution formation portion 210. The output direction "R" may be understood as a rearward direction. Further, the direction opposite to the output direction "R" may be named an opposite output direction and may be understood as a forward direction.

The transmission optic 111 may be provided as a plurality of transmission optics 111. The plurality of transmission optics 111 may be arranged in a vertical direction "H." The vertical direction "H" may be defined as a direction perpendicular to the output direction "R." The vertical direction "H" may be understood as a concept including an up-down direction. A corrosion-treated area may be provided between adjacent two transmission optics 111 among the plurality of transmission optics 111. At least a portion of the light beam output from the light source 30 may be scattered in the corrosion-treated area provided between the adjacent two transmission optics 111.

The light beam input into the image formation part 300 may be output from the second light transmission portion 120. The light beam output from the second light transmission portion 120 may be the other portion of the transmission light beam. The other portion of the transmission light beam may be named a second transmission light beam. The second light transmission portion 120 may guide the light beam output from the light source 30 to the image formation part 300.

The second light transmission portion 120 may extend from the first light transmission portion 110 in the opposite output direction. The second light transmission portion 120 may have a convex shape in a guide direction. The guide direction may be defined as a direction inclined in the output direction "R" with respect to the vertical direction "H." For example, the guide direction may be defined as a direction inclined toward the output direction "R" with respect to a direction away from the light transmission part 100 in the vertical direction "H." The guide direction may include a first guide direction and a second guide direction, which will be described below. Based on FIG. 1, the first guide direction may be understood as a direction toward a lower left side, and the second guide direction may be understood as a direction toward an upper left side. A transmission corrosion area 121 may be provided in the second light transmission portion 120.

The transmission corrosion area 121 may be defined as a corrosion-treated portion of the second light transmission portion 120. The transmission corrosion area 121 may scatter at least a portion of the light beam output from the light source 30.

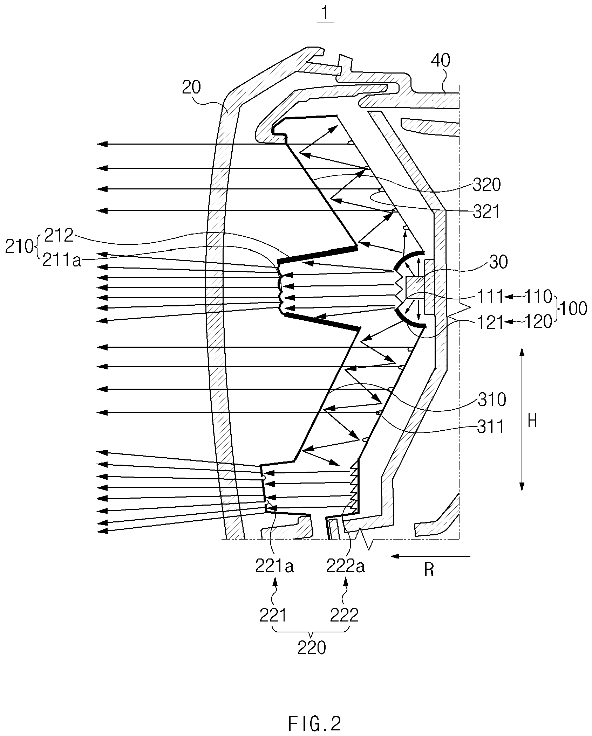

Further referring to FIG. 2, the transmission light beam output from the light transmission part 100 may be input into, pass through, and be then output from the light distribution formation part 200. The light beam output from the light distribution formation part 200 may form a light distribution pattern. Such a light distribution pattern may include a first light distribution pattern and a second light distribution pattern, which will be described below. The light distribution formation part 200 may include the first light distribution formation portion 210 and a second light distribution formation portion 220.

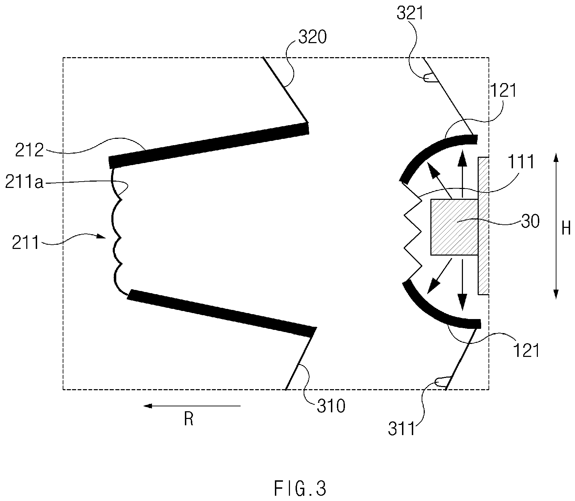

Further referring to FIG. 3, the first transmission light beam may be input into, pass through, and be then output from the first light distribution formation portion 210. For example, the first transmission light beam output from the first light distribution formation portion 210 may pass through the outer lens 20 and may then be output externally (i.e., to the outside) of the lamp 1. The light beam output from the first light distribution formation portion 210 may form a first light distribution pattern. As an example, the first light distribution formation portion 210 may be disposed above the second light distribution formation portion 220. The first light distribution formation portion 210 may be named an "upper light distribution formation portion." The first light distribution formation portion 210 may include the first light distribution output area 211 and an extension area 212.

The first light distribution output area 211 may be defined as an area from which the first transmission light beam is output. The first light distribution output area 211 may extend in the vertical direction "H." The first light distribution output area 211 may be disposed from the image formation part 300 in the output direction "R". The first transmission light beam output from the first light distribution output area 211 may be diffused in the vertical direction "H." The first light distribution output area 211 may be provided with a first light distribution optic. The first light distribution optic may have a convex shape in the output direction "R." The first light distribution optic may be arranged as a plurality of first light distribution optics in the vertical direction "H." A first light distribution corrosion area 211a may be provided between the two adjacent first light distribution optics among the first light distribution optics.

The first light distribution corrosion area 211a may be defined as a corrosion-treated portion of the first light distribution output area 211. The first light distribution corrosion area 211a may scatter the first transmission light beam. The first light distribution corrosion area 211a may be provided as a plurality of first light distribution corrosion areas 211a. The plurality of first light distribution corrosion areas 211a and the plurality of first light distribution optics may be alternately arranged in the vertical direction "H."

The extension area 212 may extend between the first light distribution output area 211 and the image formation part 300 in the output direction "R." The extension area 212 may have a shape, of which the width in the vertical direction "H" becomes narrower as it goes in the output direction "R." The extension area 212 may be corrosion-treated. The corrosion-treated extension area 212 may scatter at least a portion of the first transmission light beam.

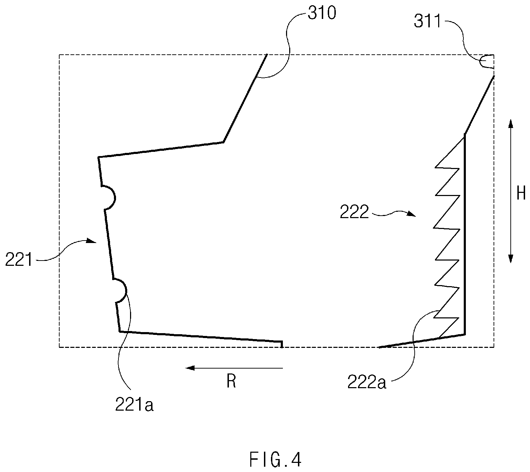

Further referring to FIG. 4, a pattern formation light beam among the second transmission light beam may be input into, pass through, and be then output from the second light distribution formation portion 220. A portion of the second transmission light beam may be named an image formation light beam input into the image formation part 300, and the other portion of the second transmission light beam may be named a pattern formation light beam input into the second light distribution formation portion 220. The pattern formation light beam may be a portion of a light beam input into a first light guide 310, which will be described below, among the second transmission light beam. The pattern formation light beam may be a light beam transmitting the second light transmission portion 120 and passing through the first light guide 310. Further, the image formation light beam may include a first image formation light beam and a second image formation light beam. The first image formation light beam may be defined as a light beam which is input into the first light guide 310, is substantially entirely reflected by a first image optic 311, which will be described below, and is then output to the outside of the lamp 1 in the output direction "R." Further, the second image formation light beam may be defined as a light beam which is input into a second light guide 320, is substantially entirely reflected by a second image optic 321, which will be described below, and is then output to the outside of the lamp 1 in the output direction "R."

The pattern formation light beam output from the second light distribution formation portion 220 may pass through the outer lens 20 and may be then output to the outside of the lamp 1. The light beam output from the second light distribution formation portion 220 may form a second light distribution pattern. The second light distribution formation portion 220 may be named a "lower light distribution formation portion." The second light distribution formation portion 220 may include a second light distribution output area 221 and an input area 222.

The second light distribution output area 221 may be defined as an area from which the pattern formation light beam is output. The second light distribution output area 221 may form a side of the second light distribution formation portion 220 in the output direction "R." The second light distribution output area 221 may extend in the vertical direction "H." The pattern formation light beam output from the second light distribution output area 221 may be diffused in the vertical direction "H." The second light distribution output area 221 may be provided with a plurality of second light distribution optics.

The plurality of second light distribution optics may be arranged spaced apart from each other in the vertical direction "H." A second light distribution corrosion area 221a may be provided between the two adjacent second light distribution optics among the second light distribution optics.

The second light distribution corrosion area 221a may be defined as a corrosion-treated portion of the second light distribution output area 221. The second light distribution corrosion area 221a may scatter the pattern formation light beam. The second light distribution corrosion area 221a may be provided as a plurality of second light distribution corrosion areas 221a. The plurality of second light distribution corrosion areas 221a and the plurality of second light distribution optics may be alternately arranged in the vertical direction "H."

The light beam having passed through the first light guide 310 may be input into the input area 222. The input area 222 may form a side of the second light distribution formation portion 220 in the opposite output direction. For example, the input area 222 may be disposed on a side of the second light distribution output area 221 in the opposite output direction. A light distribution reflection optic 222a may be formed in the input area 222.

The light distribution reflection optic 222a may reflect, toward the second light distribution output area 221, the pattern formation light beam having passed through the first light guide 310. The light distribution reflection optic 222a may have a concavo-convex shape protruding in the output direction "R." The light distribution reflection optic 222a may be provided as a plurality of light distribution reflection optics 222a. The plurality of light distribution reflection optics 222a may be arranged in the vertical direction "H."

The image formation part 300 may output the light beam forming the image pattern to the outside of the lamp 1. The image pattern may include a first image pattern and a second image pattern, which will be described below. The image formation part 300 may include the light guides 310 and 320. The light guides 310 and 320 may guide progress of the second transmission light in a guide direction. The second transmission light beam input into the light guides 310 and 320 may be substantially entirely reflected inside the light guides 310 and 320. The light guides 310 and 320 may include the first light guide 310 and the second light guide 320.

The first image formation light beam and the pattern formation light beam among the second transmission light beam may be input into the first light guide 310. The first light guide 310 may guide progress of the pattern formation light beam to the second light distribution formation portion 220 in the first guide direction. The light input into the first light guide 310 may be substantially entirely reflected inside the first light guide 310. The first light guide 310 may extend from a lower end of each of the first light distribution formation portion 210 and the second light transmission portion 120 in the first guide direction. The first image optic 311 may be formed in the first light guide 310.

The first image optic 311 may reflect the first image formation light beam toward the outside of the lamp 1 so as to form the first image pattern. In other words, the first image optic 311 may guide progress of the first image formation light beam to the outside of the lamp 1 in the output direction "R." The first image optic 311 may be formed on a side of the first light guide 310 in the opposite output direction. Further, the first image optic 311 may have a concavo-convex shape protruding in the output direction "R." Further, the first image optic 311 may be corrosion-treated. For example, the corrosion-treated first image optic 311 may scatter the first image formation light beam.

The first image optic 311 may be provided as a plurality of first image optics 311. The plurality of first image optics 311 may be arranged spaced apart from each other in the first guide direction. The first image pattern may be three-dimensionally observed by the outside person outside the lamp 1 through the plurality of first image optics 311. In other words, the plurality of first image optics 311 may enhance the aesthetics felt by the person who looks at the lamp 1.

The second image formation light beam and an extinction light beam among the second transmission light beam may be input into the second light guide 320. The extinction light beam may be defined as a light beam, which is not output to the outside of the lamp 1, among the light input into the second light guide 320. In summary, the second transmission light beam may be understood as a concept including the pattern formation light beam, the first image formation light beam, the second image formation light beam, and the extinction light beam. Furthermore, the pattern formation light beam and the first image formation light beam may be input into the first light guide 310, and the second image formation light beam and the extinction light beam may be input into the second light guide 320.

The light input into the second light guide 320 may be substantially entirely reflected inside the second light guide 320. The second light guide 320 may extend from an upper end of each of the first light distribution formation portion 210 and the second light transmission portion 120 in the second guide direction. Further, the second light guide 320 and the first light guide 310 may be spaced apart from each other in the vertical direction "H." For example, a separation distance between the second light guide 320 and the first light guide 310 in the vertical direction "H" may increase in the output direction "R." The second image optic 321 may be formed in the second light guide 320.

The second image optic 321 may reflect the second image formation light beam toward the outside of the lamp 1 so as to form the second image pattern. In other words, the second image optic 321 may guide progress of the second image formation light beam to the outside of the lamp 1 in the output direction "R."

The second image optic 321 may be formed on a side of the second light guide 320 in the opposite output direction. Further, the second image optic 321 may have a concavo-convex shape protruding in the output direction "R." Further, the second image optic 321 may be corrosion-treated. For example, the corrosion-treated second image optic 321 may scatter the second image formation light beam.

The second image optic 321 may be provided as a plurality of second image optics 321. The plurality of second image optics 321 may be arranged spaced apart from each other in the second guide direction. The second image pattern may be three-dimensionally observed by the outside person outside the lamp 1 through the plurality of second image optics 321. In other words, the plurality of second image optics 321 may enhance the aesthetics felt by the person who looks at the lamp 1. The light beam output from the inner lens 10 is input into, passes through, and is then output to the outside of the lamp 1 through the outer lens 20. The outer lens 20 may be disposed from the inner lens 10 in the output direction "R". For example, the outer lens 20 may form a rear side of the lamp 1.

The light source 30 may output the light beam toward the light transmission part 100. As an example, the light source 30 may be a light emitting diode (LED). In more detail, the light source 30 may be a 4FLED. The 4FLED may mean an LED in which light beams are output from four portions thereof. When the light source 30 is the 4FLED, light may be output from four output surfaces (as an example, an upper surface, a lower surface, a left surface, and a right surface) perpendicular to the output direction "R" of the light source 30. However, the spirit of the present disclosure is not limited thereto, the number of output surfaces, from which the light beam may output, among the light source 30 may be five or more, and the light beam may also output from a side surface of the light source 30 in the output direction "R" and a side surface of the light source 30 in the opposite output direction. As an example, in the light source 30, the four output surfaces perpendicular to the output direction "R" may be arranged to face the second light transmission portion 120.

As an example, the light source 30 may be provided as a one light source 30. In more detail, the lamp 1, according to the present disclosure, may form both the light distribution pattern and the image pattern using the one light source 30. In this way, since both the light distribution pattern and the image pattern may be formed using only the one light source 30, the number of light sources 30 required for manufacturing the lamp 1 is minimized, and thus manufacturing cost of the lamp 1 is reduced.

The housing 40 together with the outer lens 20 may form the exterior of the lamp 1. The inner lens 10 and the light source 30 may be arranged inside the housing 40 and the outer lens 20. Further, the housing 40 may support the inner lens 10, the outer lens 20, and the light source 30.

A lamp according to the present disclosure is provided with an inner lens in which a function component and a design component are integrated to form a light distribution that satisfies regulations, and at the same time, implement a design that enhances aesthetics, and thus a structure thereof may be simplified, and cost thereof may be reduced.

The scope of protection of the present invention is defined by the appended claims.

## Claims

1. An inner lens (10) for a vehicle lamp (1), comprising:
a light transmission part (100) configured to receive at least a portion of a light beam output from a light source (30) and output a transmission light beam, wherein the transmission light beam comprises a first transmission light beam and a second transmission light beam;
a light distribution formation part (200) configured to generate, based on the transmission light beam output from the light transmission part (100), a first light beam having a light distribution pattern, and externally output the first light beam, wherein the light distribution pattern defines a pattern light beam having light properties that satisfy regulations to provide information to an outside person,
wherein the light distribution formation part (200) includes: a first light distribution formation portion (210) configured to receive the first transmission light beam and externally output a first light distribution pattern, and wherein the first transmission light beam is diffused in the first light distribution output area (211), through which the first transmission light beam is output, within the first light distribution formation portion (210); and
an image formation part (300) configured to generate, based on the transmission light beam output from the light transmission part (100), a second light beam having an image pattern, and externally output the second light beam, wherein the image pattern defines a pattern light beam providing aesthetics to the outside person,
wherein the image formation part (300) includes a light guide (310; 320) extending in a guide direction offset from an output direction (R) of the first light distribution formation portion (200) and configured to receive and guide the second transmission light beam in the guide direction, and
wherein the first light distribution formation portion (210) includes an extension area (212) extending between the first light distribution output area (211) and the light guide (310; 320) in the output direction (R) of the first light distribution formation portion (210), wherein the extension area (212) is corrosion-treated to scatter at least a portion of the first transmission light beam passing through the light transmission part (100).

2. The inner lens (10) of claim 1, wherein the extension area (212) has a vertically tapered shape.

3. The inner lens (10) of claim 1 or 2, wherein the light guide (310) is configured to reflect a substantially entire portion of the input second transmission light beam.

4. The inner lens (10) of claim 3, wherein the light guide (310) includes an image optic (321) configured to externally reflect an image formation light beam that is a first portion of the input second transmission light beam so as to form the image pattern.

5. The inner lens (10) of claim 4, wherein:
a direction perpendicular to the output direction (R) of the first light distribution formation portion (210) is a vertical direction (H),
the guide direction is a direction inclined toward the output direction (R) as a distance from the light transmission part (100) in the vertical direction (H) increases, and
the image optic (311) comprises a plurality of image optics (311, 321) spaced apart from each other in the guide direction.

6. The inner lens (10) of claim 5, wherein each of the plurality of image optics (311, 321) has a shape recessed from a side of the light guide (310, 320) in the output direction.

7. The inner lens (10) of any one of claims 4 to 6, wherein:
the second light distribution formation portion (220) is configured to receive a pattern formation light beam that is a second portion of the second transmission light beam and externally output a second light distribution pattern, and
the light guide (310, 320) includes a first light guide (310) extending between the light transmission part and the second light distribution formation portion (220) and configured to guide the pattern formation light beam toward the second light distribution formation portion.

8. The inner lens (10) of claim 7, wherein a light distribution reflection optic (222a) configured to reflect the pattern formation light beam to the outside is formed in an input area into which the pattern formation light beam guided by the light guide is input, within the second light distribution formation portion (220).

9. The inner lens (10) of claim 8, wherein the pattern formation light beam reflected by the light distribution reflection optic (222a) is diffused in a second light distribution output area (221), from which the pattern formation light beam reflected by the light distribution reflection optic (222a) is output, within the second light distribution formation portion (220).

10. The inner lens (10) of claim 9, wherein:
the input area (222) is formed on a side of the second light distribution formation portion (220) in a direction opposite to the output direction (R), and
the second light distribution output area (221) is formed on a side of the second light distribution formation portion (220) in the output direction (R).

11. The inner lens (10) of any one of claims 7 to 10, wherein:
the light guide (310, 320) further includes a second light guide (320) disposed above the first light guide (310),
the first light guide (310) is disposed below the first light distribution formation portion (210) and above the second light distribution formation portion (220), and
the second light guide (320) is disposed above the first light distribution formation portion (210).

12. The inner lens (10) of claim 11, wherein a separation distance between the first light guide (310) and the second light guide (320) in the vertical direction (H) increases in the output direction (R).

## Patentansprüche

1. Innenlinse (10) für eine Fahrzeuglampe (1), aufweisend:
einen Lichtübertragungsteil (100), der konfiguriert ist, um mindestens einen Teil eines aus einer Lichtquelle (30) ausgegebenen Lichtstrahls zu empfangen und einen Übertragungslichtstrahl auszugeben, wobei der Übertragungslichtstrahl einen ersten Übertragungslichtstrahl und einen zweiten Übertragungslichtstrahl aufweist;
einen Lichtverteilungserzeugungsteil (200), der konfiguriert ist, um auf Basis des aus dem Lichtübertragungsteil (100) ausgegebenen Übertragungslichtstrahl einen ersten Lichtstrahl, der ein Lichtverteilungsmuster hat, zu erzeugen und den ersten Lichtstrahl nach außen auszugeben, wobei das Lichtverteilungsmuster einen Musterlichtstrahl definiert, der Lichteigenschaften hat, die Vorschriften zur Bereitstellung von Information an eine Außenperson erfüllen,
wobei der Lichtverteilungserzeugungsteil (200) aufweist: einen ersten Lichtverteilungserzeugungsabschnitt (210), der konfiguriert ist, um den ersten Übertragungslichtstrahl zu empfangen und ein erstes Lichtverteilungsmuster nach außen auszugeben, und wobei in dem ersten Lichtverteilungserzeugungsabschnitt (210) der erste Übertragungslichtstrahl in der ersten Lichtverteilungsausgabezone (211), durch welche der erste Übertragungslichtstrahl ausgegeben wird, gestreut wird; und
einen Bilderzeugungsteil (300), der konfiguriert ist, um auf Basis des aus dem Lichtübertragungsteil (100) ausgegebenen Übertragungslichtstrahl einen zweiten Lichtstrahl, der ein Bildmuster hat, zu erzeugen und den zweiten Lichtstrahl nach außen auszugeben, wobei das Bildmuster einen Musterlichtstrahl definiert, den die Außenperson als ästhetisch empfindet,
wobei der Bilderzeugungsteil (300) einen Lichtleiter (310; 320) aufweist, der sich in eine Führungsrichtung erstreckt, die zu einer Ausgaberichtung (R) des ersten Lichtverteilungserzeugungsabschnitts (210) versetzt ist, und der konfiguriert ist, um den zweiten Übertragungslichtstrahl zu empfangen und in die Führungsrichtung zu führen, und
wobei der erste Lichtverteilungserzeugungsabschnitt (210) eine Erweiterungszone (212) aufweist, die sich zwischen der ersten Lichtverteilungsausgabezone (211) und dem Lichtleiter (310; 320) in der Ausgaberichtung (R) des ersten Lichtverteilungserzeugungsabschnitts (210) erstreckt, wobei die Erweiterungszone (212) korrosionsbehandelt ist, um mindestens einen Teil des durch den Lichtübertragungsteil (100) hindurchgegangenen ersten Übertragungslichtstrahl zu streuen.

2. Innenlinse (10) nach Anspruch 1, wobei die Erweiterungszone (212) eine sich vertikal verjüngende Form hat.

3. Innenlinse (10) nach Anspruch 1 oder 2, wobei der Lichtleiter (310) konfiguriert ist, um einen im Wesentlichen gesamten Teil des eingegebenen zweiten Übertragungslichtstrahl zu reflektieren.

4. Innenlinse (10) nach Anspruch 3, wobei der Lichtleiter (310) eine Abbildungsoptik (321) aufweist, die konfiguriert ist, um einen Bilderzeugungslichtstrahl, der ein erster Teil des eingegebenen zweiten Übertragungslichtstrahls ist, nach außen zu reflektieren, um auf diese Weise das Bildmuster zu erzeugen.

5. Innenlinse (10) nach Anspruch 4, wobei:
eine Richtung, die senkrecht zur Ausgaberichtung (R) des ersten Lichtverteilungserzeugungsabschnitts (210) ist, eine vertikale Richtung (H) ist,
die Führungsrichtung eine Richtung ist, die zur Ausgaberichtung (R) geneigt ist, mit zunehmender Distanz von dem Lichtübertragungsteil (100) in der vertikalen Richtung (H), und
die Abbildungsoptik (311) mehrere Abbildungsoptiken (311, 321) aufweist, die in der Führungsrichtung voneinander beabstandet sind.

6. Innenlinse (10) nach Anspruch 5, wobei jede der mehreren Abbildungsoptiken (311, 321) eine Aussparung ist, die auf einer der Ausgaberichtung zugewandten Seite des Lichtleiters (310, 320) gebildet ist.

7. Innenlinse (10) nach einem der Ansprüche 4 bis 6, wobei:
der zweite Lichtverteilungserzeugungsabschnitt (220) konfiguriert ist, um einen Mustererzeugungslichtstrahl zu empfangen, der ein zweiter Teil des zweiten Übertragungslichtstrahls ist, und ein zweites Lichtverteilungsmuster nach außen auszugeben, und
der Lichtleiter (310, 320) einen ersten Lichtleiter (310) aufweist, der sich zwischen dem Lichtübertragungsteil und dem zweiten Lichtverteilungserzeugungsabschnitt (220) erstreckt und konfiguriert ist, um den Mustererzeugungslichtstrahl hin zu dem zweiten Lichtverteilungserzeugungsabschnitt zu führen.

8. Innenlinse (10) nach Anspruch 7, wobei in dem zweiten Lichtverteilungserzeugungsabschnitt (220) eine Lichtverteilungsreflexionsoptik (222a), die konfiguriert ist, um den Mustererzeugungslichtstrahl nach außen zu reflektieren, in einer Eingabezone, in welche der von dem Lichtleiter geführte Mustererzeugungslichtstrahl eingegeben wird, gebildet ist.

9. Innenlinse (10) nach Anspruch 8, wobei in dem zweiten Lichtverteilungserzeugungsabschnitt (220) der von der Lichtverteilungsreflexionsoptik (222a) reflektierte Mustererzeugungslichtstrahl in einer zweiten Lichtverteilungsausgabezone (221), aus der der von der Lichtverteilungsreflexionsoptik (222a) reflektierte Mustererzeugungslichtstrahl ausgegeben wird, gestreut wird.

10. Innenlinse (10) nach Anspruch 9, wobei:
die Eingabezone (222) auf einer Seite des zweiten Lichtverteilungserzeugungsabschnitts (220) gebildet ist, die in einer zur Ausgaberichtung (R) entgegengesetzten Richtung ist, und
die zweite Lichtverteilungsausgabezone (221) auf einer Seite des zweiten Lichtverteilungserzeugungsabschnitts (220) gebildet ist, die in der Ausgaberichtung (R) ist.

11. Innenlinse (10) nach einem der Ansprüche 7 bis 10, wobei:
der Lichtleiter (310, 320) ferner einen zweiten Lichtleiter (320) aufweist, der oberhalb des ersten Lichtleiters (310) angeordnet ist,
der erste Lichtleiter (310) unterhalb des ersten Lichtverteilungserzeugungsabschnitts (210) und oberhalb des zweiten Lichtverteilungserzeugungsabschnitts (220) angeordnet ist, und
der zweite Lichtleiter (320) oberhalb des ersten Lichtverteilungserzeugungsabschnitts (210) angeordnet ist.

12. Innenlinse (10) nach Anspruch 11, wobei eine Distanz, in der der erste Lichtleiter (310) und der zweite Lichtleiter (320) in der vertikalen Richtung (H) voneinander separiert sind, in der Ausgaberichtung (R) zunimmt.

## Revendications

1. Lentille interne (10) pour une lampe de véhicule (1), comprenant :
une partie transmission de lumière (100) configurée pour recevoir au moins une portion d'un faisceau de lumière émis par une source de lumière (30) et émettre un faisceau de lumière de transmission, dans laquelle le faisceau de lumière de transmission comprend un premier faisceau de lumière de transmission et un deuxième faisceau de lumière de transmission ;
une partie formation de distribution de lumière (200) configurée pour générer, sur la base du faisceau de lumière de transmission émis par la partie transmission de lumière (100), un premier faisceau de lumière ayant un motif de distribution de lumière, et émettre vers l'extérieur le premier faisceau de lumière, dans laquelle le motif de distribution de lumière définit un faisceau de lumière à motif ayant des propriétés de lumière qui satisfont des règles pour fournir des informations à une personne extérieure,
dans laquelle la partie formation de distribution de lumière (200) inclut : une première portion de formation de distribution de lumière (210) configurée pour recevoir le premier faisceau de lumière de transmission et émettre vers l'extérieur un premier motif de distribution de lumière, et dans laquelle le premier faisceau de lumière de transmission est diffusé dans la première zone d'émission de distribution de lumière (211), à travers laquelle est émis le premier faisceau de lumière de transmission, à l'intérieur de la première portion de formation de distribution de lumière (210) ; et
une partie de formation d'image (300) configurée pour générer, sur la base du faisceau de lumière de transmission émis par la partie transmission de lumière (100), un deuxième faisceau de lumière ayant un motif d'image, et émettre vers l'extérieur le deuxième faisceau de lumière, dans laquelle le motif d'image définit un faisceau de lumière à motif fournissant une esthétique à la personne extérieure,
dans laquelle la partie formation d'image (300) inclut un guide de lumière (310 ; 320) s'étendant dans une direction de guide décalée par rapport à une direction d'émission (R) de la première portion de formation de distribution de lumière (200) et configurée pour recevoir et guider le deuxième faisceau de lumière de transmission dans la direction de guide, et
dans laquelle la première portion de formation de distribution de lumière (210) inclut une zone d'extension (212) s'étendant entre la première zone d'émission de distribution de lumière (211) et le guide de lumière (310 ; 320) dans la direction d'émission (R) de la première portion de formation de distribution de lumière (210), dans laquelle la zone d'extension (212) est traitée contre la corrosion pour diffuser au moins une portion du premier faisceau de lumière de transmission passant à travers la partie de transmission de lumière (100).

2. Lentille interne (10) selon la revendication 1, dans laquelle la zone d'extension (212) a une forme verticalement effilée.

3. Lentille interne (10) selon la revendication 1 ou 2, dans laquelle le guide de lumière (310) est configuré pour réfléchir une portion sensiblement entière du deuxième faisceau de lumière de transmission entré.

4. Lentille interne (10) selon la revendication 3, dans laquelle le guide de lumière (310) inclut une optique d'image (321) configurée pour réfléchir vers l'extérieur un faisceau de lumière de formation d'image qui est une première portion du deuxième faisceau de lumière de transmission entré de sorte à former le motif d'image.

5. Lentille interne (10) selon la revendication 4, dans laquelle :
une direction perpendiculaire à la direction d'émission (R) de la première portion de formation de distribution de lumière (210) est une direction verticale (H),
la direction de guide est une direction inclinée vers la direction d'émission (R) au fur et à mesure qu'une distance depuis la partie de transmission de lumière (100) dans la direction verticale (H) augmente, et
l'optique d'image (311) comprend une pluralité d'optiques d'image (311, 321) espacées les unes des autres dans la direction de guide.

6. Lentille interne (10) selon la revendication 5, dans laquelle chacune de la pluralité d'optiques d'image (311, 321) a une forme en retrait par rapport à un côté du guide de lumière (310, 320) dans la direction d'émission.

7. Lentille interne (10) selon l'une quelconque des revendications 4 à 6, dans laquelle :
la deuxième portion de formation de distribution de lumière (220) est configurée pour recevoir un faisceau de lumière de formation de motif qui est une deuxième portion du deuxième faisceau de lumière de transmission et émettre vers l'extérieur un deuxième motif de distribution de lumière, et
le guide de lumière (310, 320) inclut un premier guide de lumière (310) s'étendant entre la partie de transmission de lumière et la deuxième portion de formation de distribution de lumière (220) et configuré pour guider le faisceau de lumière de formation de motif vers la deuxième portion de formation de distribution de lumière.

8. Lentille interne (10) selon la revendication 7, dans laquelle une optique de réflexion de distribution de lumière (222a) configurée pour réfléchir le faisceau de lumière de formation de motif vers l'extérieur est formée dans une zone d'entrée dans laquelle est entré le faisceau de lumière de formation de motif guidé par le guide de lumière, à l'intérieur de la deuxième portion de formation de distribution de lumière (220).

9. Lentille interne (10) selon la revendication 8, dans laquelle le faisceau de lumière de formation de motif réfléchi par l'optique de réflexion de distribution de lumière (222a) est diffusé dans une deuxième zone d'émission de distribution de lumière (221), depuis laquelle est émis le faisceau de lumière de formation de motif réfléchi par l'optique de réflexion de distribution de lumière (222a), à l'intérieur de la deuxième portion de formation de distribution de lumière (220).

10. Lentille interne (10) selon la revendication 9, dans laquelle :
la zone d'entrée (222) est formée sur un côté de la deuxième portion de formation de distribution de lumière (220) dans une direction opposée à la direction d'émission (R), et
la deuxième zone d'émission de distribution de lumière (221) est formée sur un côté de la deuxième portion de formation de distribution de lumière (220) dans la direction d'émission (R).

11. Lentille interne (10) selon l'une quelconque des revendications 7 à 10, dans laquelle :
le guide de lumière (310, 320) inclut en outre un deuxième guide de lumière (320) disposé au-dessus du premier guide de lumière (310),
le premier guide de lumière (310) est disposé en dessous la première portion de formation de distribution de lumière (210) et au-dessus de la deuxième portion de formation de distribution de lumière (220), et
le deuxième guide de lumière (320) est disposé au-dessus de la première portion de formation de distribution de lumière (210).

12. Lentille interne (10) selon la revendication 11, dans laquelle une distance de séparation entre le premier guide de lumière (310) et le deuxième guide de lumière (320) dans la direction verticale (H) augmente dans la direction d'émission (R).
